# EUROPEAN PATENT APPLICATION

(11) **EP 4 119 338 A1**
(43) Date of publication of application: **18.01.2023**
(21) Application number: 21185604.2
(22) Date of filing: 14.07.2021
(51) Int. Cl.: B30B 15/00, B30B 15/26, B21D 24/02, G05B 19/00

(54) **METHOD OF OPERATING A PRESS APPARATUS AND FORMING PROCESS**

(71) Applicant: Fraunhofer-Gesellschaft zur Förderung der angewandten Forschung e.V., 80686 München (DE); AP&T Sweden AB, 423 21 Ulricehamn (SE); INEGI - Instituto de Ciência e Inovação em Engenharia Mecânica e Industrial, 4200-465 Porto (PT); CRF - Centro Ricerche Fiat S.C.p.A., 10043 Orbassano (IT)
(72) Inventor: KORIATH, Hans-Joachim, 80686 München (DE); KARLSSON, Mikael, 514 32 Tranemo (SE); BASSAN, Daniele, 10043 Orbassano (TO) (IT); DI GIAMMARTINO, Nicolo, 64020 Castellalto Teramo (IT); TAVARES, Paulo, Porto, 4200 465 (PT)
(74) Representative: Grünecker Patent- und Rechtsanwälte PartG mbB

(57) **Abstract**

Provided is a method of operating a press apparatus, the press apparatus comprising a controllable pressing force application device configured to apply a pressing force to a work piece to be fabricated by the press apparatus during a forming process. In order to provide pressing which results in dimension stable work pieces with good quality, the method comprises: a) regulating a posture, orientation and/or position and/or force of at least the pressing force application device based on at least one signal obtained during the forming process using a virtual model of at least part, and/or b) the press apparatus further comprising a controllable die cushion device, and the method comprises: regulating a posture, orientation and/or position and/or force of the die cushion device using a virtual model of at least part of the die cushion device.

## Description

The present invention refers to a method of operating a press apparatus and forming process and a press apparatus.

In document EP 1 834 712 A1 a ram of a bending apparatus is inclined in an opposite direction with respect to an inclination calculated in advance. The calculation is based on various input data regarding the bending process to be executed.

EP 3 330 017 B1 relates to a die cushion apparatus of a press machine to provide a die cushion apparatus of a press machine and a die cushion controlling method capable of suppressing inclination of the cushion pad that is generated at the start of the die cushion force control, as well as smoothening the die cushion action in the plane face, thereby enhancing formability.

However, in current press apparatuses materials with high strength properties are used as materials for the work piece. Thereby, high pressing forces are required to bring the work piece in the desired shape. The high loads in turn can cause rigid body and/or elastic deviations in the fabrication system which detrimentally affect the quality of the finished part. These rigid body and/or elastic deviations cannot be sufficiently counteracted by the method of EP 1 834 712 A1 or EP 3 330 017B1.

Hence, it is an object to provide pressing which results in dimension stable work pieces with good quality.

Above object is achieved by a method according to claim 1 and a press apparatus according to claim 15.

According to a first aspect of the invention, there is provided a method of operating a press apparatus and/or a forming process, wherein the press apparatus comprises a pressing force application device configured to apply a pressing force to a work piece to be fabricated by the press apparatus during a forming process, wherein the method comprises: a) regulating a posture, orientation and/or position and/or force of at least the pressing force application device based on at least one signal obtained during the forming process using a virtual model of at least part of the press apparatus, preferably a posture, orientation and/or position and/or load related signal, and/or b) the press apparatus further comprising a controllable die cushion device, the method comprising: regulating a posture, orientation and/or a position and/or force of the die cushion device using a virtual model of at least part of the die cushion device.

According to the first aspect, in a) a signal obtained during the forming process is used. Hence, the current forming process can be regulated in a real time manner. In particular, counteraction is not calculated in advance but rather counteraction can be carried out based on the actual behaviour of the pressing process. As the respective signals can be inputted to the virtual model, compensation values can be derived from the virtual model. If posture, orientation and/or position and/or load related signals obtained during the forming process are used, a direct feedback with respect to the controlled behaviour can be given.

Alternatively, or additionally, the regulation of b) may be provided. The influence of the die cushion device is not sufficiently considered in the prior art. By providing a virtual model related to the behaviour of the die cushion device, it is possible to counteract deviations via the blank holder device.

Preferably, a deviation from a reference value is determined based on an output of the virtual model. The virtual model may be a model provided in a feedback portion of a regulation loop. The virtual model may be provided with a signal related to the forming process, preferably, the at least one signal obtained during the forming process as input and/or may provide an output used to determine a deviation from a reference value. As a result, the method can increase accuracy in manufacturing the work piece.

According to a further aspect, in a) the virtual model can comprise a rigid body and/or an elastic model of at least part of the press apparatus, preferably calculating at least one of deformations, displacements and loads of at least part of the press apparatus and more preferably a deviation from a reference value is determined based on the calculated deformations, displacements and loads.

According thereto, the mechanical behaviour of at least part of the press apparatus can be specified and errors owed to misalignment and deformation can be derived from the model and accordingly counteracted. As a deviation from a reference value is determined based on the calculated deformations, displacements, and loads, the virtual model acts as a virtual sensor. Preferably, at least part of the press apparatus, more preferably, at least part of the pressing force application device comprises an elastic beam model, most preferably, a model based on the Timoshenko beam. Thereby, an exact model for the structure can be provided which improves calculability in real time.

According to still another aspect, in a) the virtual model, preferably the elastic model, can comprise an analytic model, wherein even more preferably the model is provided with such a number of respective signals that a statically and/or dynamically determined equation system is provided.

This also enables improvement of calculability and calculation time, wherefore real time implication can more reliably implemented. Hence, errors can be counteracted in real time. In addition, a well defined and unambiguous solution for the model can be obtained.

According to still another aspect, in a) a position and/or force of a drive source of the press force application device is adjusted and/or in b) a position and/or force of a drive source of the die cushion device is adjusted.

Thereby, the derived deviations and/or errors can be counteracted by the drive source itself which changes the behaviour of the press force application device and/or the die cushion device.

According to still another aspect, the press apparatus comprises at least one positional sensor, preferably a plurality thereof, even more preferably encoders most preferably coupled to a drive source of the pressing force application device and/or of the die cushion device and measuring the position of the drive source of the pressing force application device and/or of the die cushion device, to provide at least one of the respective signals.

In this way, the press apparatus can provide the signals used for the regulation specified in the above aspects. For example, a positional sensor coupled to the drive source can provide immediate feedback whether the drive source is appropriately adjusted. These sensors are real sensors providing information of the actual state measured on the press apparatus, while the virtual model can provides additional information of the actual state via virtual computation.

According to still another aspect, the press apparatus comprises at least one load sensor, preferably a plurality thereof, even more preferably coupled to a drive source of the pressing force application device and/or the die cushion device, detecting at least one load occurring during the forming process to provide at least one of the respective signals.

Thereby, not only forces applied by the drive sources but also forces occurring during the pressing process can be detected and inputted to the virtual model. Hence, the deviation with respect to the desired state can be determined with high accuracy which also allows fabrication with high accuracy. These sensors are real sensors providing information of the actual state measured on the press apparatus, while the virtual model can provide additional information of the actual state via virtual computation.

According to still another aspect, in b) the virtual model can comprise a machine learning model.

Hence, the model can be updated from, for example, cycle to cycle by a machine learning algorithm. The machine learning model allows for detection of cause-effect relationships between input and output quantities. In particular, control of the die cushion device needs not to be done based on experience of an operator. Rather, information regarding the work piece, the die cushion device, and further process parameters can be used to provide an accurate simulation of the effects of the die cushion device on the forming process.

Preferably, the machine learning model determines at least one of a position and a force of the die cushion device. Preferably, the position is a position of the blank holder device before a pressing force is applied.

Hence, appropriate controlling/regulating quantities regarding a pressing cycle can be set based on the information stored in the machine learning model which can be continuously updated from cycle to cycle. In other words, the force and/or position is an output of the machine learning model. The position of the die cushion device before a pressing force is applied can determine the clearance between the die and a blank holder being part of the die cushion device, or respectively, between the position where the upper die comes into contact with the blank holder and the lower die. The force applied by the die cushion device can determine the clamping force with which the work piece is clamped between the upper die, for example, and the blank holder as well as the aforementioned clearance. This clamping force is decisive for the pressing/forming process, as it affects factors such as infeed velocity etc., and is hence an appropriate controlling/regulating quantity.

According to still another aspect, the above determination can use at least one of material properties and geometry of the work piece to be fabricated, quality properties of the fabricated part and process related signals obtained during the pressing process, preferably at least one of a signal related to an infeed velocity of the work piece, a thickness of the work piece, and loads and/or positions obtained during the forming process.

Hence, values and properties known or measured in advance, during the process and after the process can be used to provide a more accurate machine learning model. The signals may be obtained, for example, by the aforementioned sensors. Depending on the signals, the machine learning model can predict suitable values of force and/or position. For example, the fabricated part can be analysed and quality related values can be fed into the machine learning model together with in-process signals obtained during the pressing process in which the part was fabricated from the work piece.

According to still another aspect in b) the virtual model may comprise an elastic model of at least part of the die cushion device, preferably calculating at least one of deformations, displacements and loads, and more preferably the orientation, force and/or position and/or posture of the die cushion is adjusted based on the calculated deformations and/or displacements and/or loads.

According thereto, the mechanical behaviour of at least part of the die cushion device and/or the forming process such as the mechanical behaviour of the work piece in terms of resulting loads and deformations, can be specified and errors owed to misalignment and deformation can be derived from the elastic model and accordingly counteracted. In particular, the force applied by the die cushion device can be adjusted such that the misalignment is reduced. It is particularly advantageous if the elastic model is an analytic model as thereby real time behaviour can be established.

According to still another aspect, the elastic model may receive an output of a machine learning model preferably the machine learning model as mentioned above.

Thereby, the effect of an output of the machine learning model in terms of the elastic and mechanical behaviour can be checked. For example, if the machine learning model determines a force and/or position increment, the effects of said increment can be determined based on the elastic model and appropriately counteracted. The machine learning model may also output parameters such as stiffness and damping of the die cushion device and/or forming process which in turn can update the elastic model itself regarding the stiffness and damping properties of the elastic model. That is, the elastic model preferably comprises a parameterization in view of at least one of the items listed above.

According to still another aspect, in b) in b1) at least before a pressing force is applied, a position of the die cushion device may be controlled.

The position of the die cushion device before a pressing force is applied can determine the clearance between the die and the blank holder, or respectively, between the position where the upper die comes into contact with the blank holder and the lower die. By controlling the same, an appropriate impact of the pressing force application device on the blank holder device can be ensured in terms of alignment. This is particularly advantageous if the step of a) as presented above is applied, as an alignment of the blank holder device with the press force application device can be ensured until the press force application device comes into contact with the blank holder device.

Preferably, in b) in b2) at the earliest at the moment a pressing force is applied, a force of the die cushion device may be regulated.

The force applied by the die cushion device determines the clamping force with which the work piece is clamped between the upper die, for example, and the blank holder. This clamping force is decisive for the pressing process, as it affects factors such as infeed velocity etc. Regulating the same can foster accuracy of the pressing process.

According to still another aspect, the die cushion device can comprise a multi-point die cushion configuring the die cushion device to hold the work piece at a plurality of locations, and wherein the position and/or posture, orientation and/or the force are regulated at least at some of the plurality of locations.

Hence, each of the locations where the die cushion holds the work piece can be regulated individually. Therefore, flexibility in the fabrication process can be increased. In particular, complex part geometries can be handled as the forces and/or positions of the separate holding locations can be freely adjusted such that the work piece can appropriately deform between these locations. The above mentioned aspects are particularly advantageous in such configuration as, for example, alignment can be obtained by appropriately regulating at at least one of the multiple points independently from the other points. At the same time, also the degrees of freedom are increased. Hence, use of the models is particularly advantageous. For example, the machine learning model may determine a force and/or position increment for any of the locations individually. Then, the elastic model of the die cushion device and/or the forming process may be fed with these increments to provide the effects of the force and/or position increments in interaction on the die cushion device and/or the forming process. It should be noted that the above quantities such as position, posture, orientation, force and load may be measured, calculated, determined and regulated/adjusted at any of the locations.

Still another aspect provides a press apparatus as specified in any of the preceding aspects and comprising a control apparatus configured to carry out the method according to any of the preceding aspects.

Thereby, a press apparatus for achieving the aforementioned advantageous effects can be provided.

In a similar way, the invention provides the aforementioned control apparatus itself.

The above aspects and effects will become more apparently by the following embodiment making reference to the appended drawings.
Fig. 1 shows an exemplary press apparatus.
Fig. 2 shows a diagram representing the method according to the present invention.

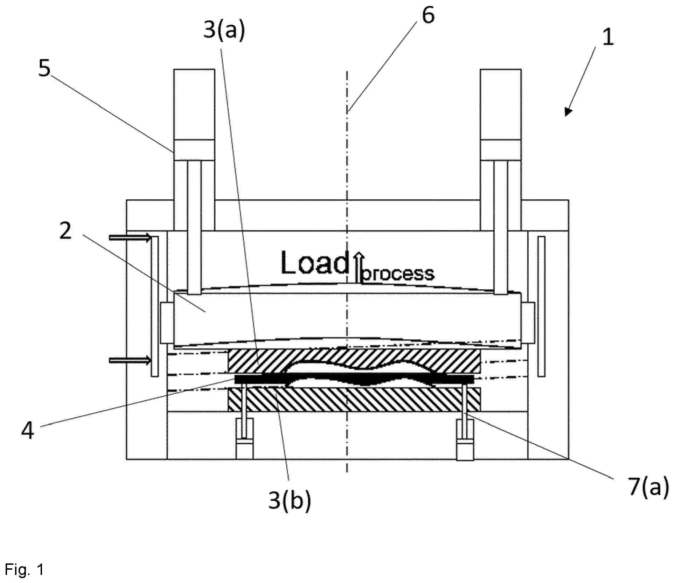

Fig. 1 shows a press apparatus 1 according to the present invention. The press apparatus comprises a pressing force application device which can comprise a ram 2, for example. On the ram 2, a tool 3a is provided which is an upper tool in the embodiment. On the lower side in Fig. 1, opposite to the upper tool 3a, a lower tool 3b is provided which is supported by a machine bed.

Between the upper tool 3a and the lower tool 3b, a work piece 4 extends in a substantially horizontal direction and in parallel working planes.

The ram 2 is, as in the present case, preferably movable in an up-and-down-direction along a vertical direction in the press apparatus 1 in Fig. 1. As can be seen, the ram 2 can be linearly guided, preferably via one or a plurality of linear guides 5 each exemplarily comprising a guiding tube and a guiding pillar provided on the ram 2. The guides 5 guide the ram 2 in the vertical direction.

For the sake of convenience, a symmetry axis 6 of the press apparatus is shown in Fig. 1.

The work piece 4 is a blank sheet which is supported by a die cushion device 7. The die cushion device 7 comprises a plurality of blank holder pins 7a. On the upper end of the blank holder pins 7a, a blank holder (not shown) as part of the die cushion device supports the work piece 4. The location of that support corresponds to a holding location. On the lower end the, blank holder pins 7a are coupled to a holding force application device such as hydraulic cylinders (not shown) each configured to control a stroke of the respective pin 7a.

A part is fabricated by the press apparatus 1, as the ram 2 is driven downward in the vertical direction by a drive source (not shown) as part of the pressing force application device. In Fig. 1, the ram 2 is shown on the way towards the downward position. During the downward movement, the tool 3a mounted to the ram 2 comes into contact with the work piece 4 and the blank holder of the die cushion device 7 as can be taken from Fig. 1. It should be noted that the work piece is clamped between the blank holder and the tool 3a. At a down dead center of the ram, a clearance is provided between the upper tool 3a and the lower tool 3b.

As can be seen in Fig. 1, during the pressing/forming process, a process load Load_{process} occurs which is offset from the symmetry axis 6 in the horizontal direction. Said asymmetrical load causes deformation and distortion of the ram 2 and the tool 3a provided thereto. Such deformation can cause misalignment with the lower tool 3b, in particular, if a work piece 4 is made of a high strength material. In particular, Fig. 1 shows a deformation of the ram as a curved line. Further, an inclination of a working plane is shown as a chain-dot-line. As can be seen from Fig. 1, the working plane is no longer parallel to the horizontal direction under the process load.

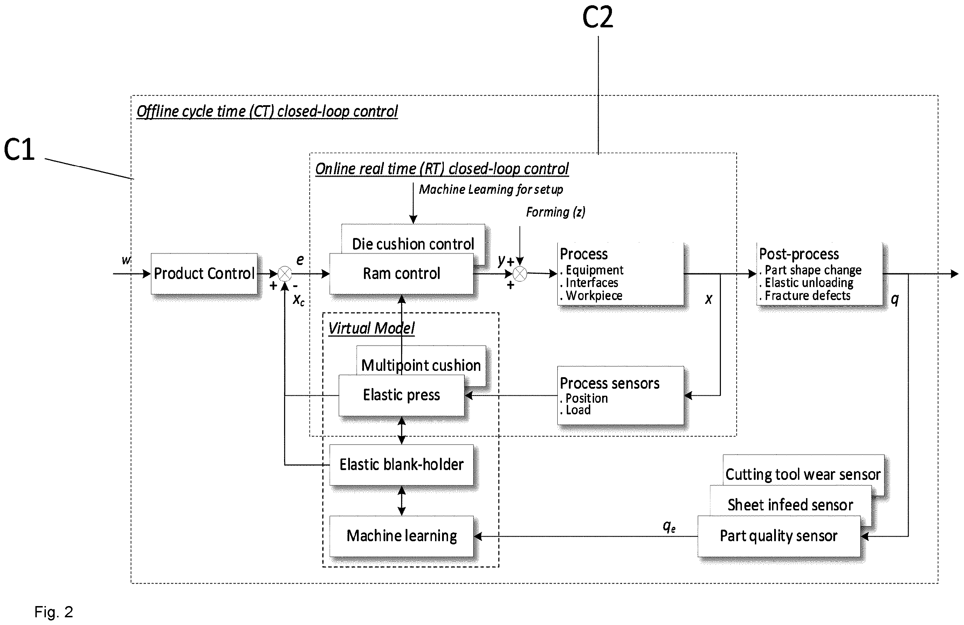

Therefore, the present invention provides the method the basic principles of which can be taken from Fig. 2 in order to counteract the aforementioned deviation.

In the exemplary embodiment, two loops C1 and C2 are provided which are respectively demarcated by two dotted rectangles.

An outer loop C1 is a closed loop control/regulation which is implemented as a cycle time loop. It includes an inner loop C2 which is also a closed loop control/regulation and is implemented as a real time loop. Please note that both loops provide a feedback control and therefore provide regulation.

A reference value w is a predetermined value determined by a product control and forms the basis for the regulation. w may be, for example, a vector comprising forces and positions to be controlled during the cycle.

The inner loop C2 regulates based on at least one signal x obtained during the current cycle of the forming process. x is also referred to as controlled variable. Therefore, also counteraction can be carried out in the current cycle. Load and position sensors can be used to determine the signal x during the forming process as it is shown in Fig. 2.

The virtual model is preferably a digitally implemented model.

The outer loop C1 uses a variable/signal q related to the previous finished cycle. Hence, the regulation is performed over a plurality of cycles. Signals obtained during the previous cycle are input to a machine learning model which determines forces and/position increments of the die cushion device 7. These outputs are input to an elastic model of the die cushion device 7, which is a model separate and independent from the elastic model of the rest of the press apparatus in the inner loop C2. As shown in Fig. 2, the elastic model of the die cushion device is preferably an elastic model comprising at least part of the blank holder. In particular, the model modelling the behaviour of the blank holder is independent from the model modelling the behaviour of at least part of the rest of the press apparatus 1 such as the model comprising at least part of the pressing force application device such as the ram 2. If a multi-point die cushion is used, the complexity of the blank holder device model is high, which then is not suitable for real time applications. Rather, a finite element model might be used for the die cushion device which requires cycle time calculations. q may be, for example, a variable describing the contour of the fabricated part. A part quality sensor might process said signal into an error quantity qₑ which specifies a deviation from the target quality. The error quantity qₑ may be a vector comprising additional data such as a sheet infeed velocity measured, for example, by a sheet infeed sensor integrated into the tool 3 and obtained during the previous cycle. Additionally, qₑ may comprise a signal related to the tool which may be determined, for example, by a cutting tool wear sensor during or a after the forming process and specifying the amount of tool wear.

The forces and positions determined by the machine learning model are determined based on the error quantity qₑ. For example, the machine learning model can comprise a plurality of neuron layers which map the error quantity qₑ to incremental positions and/or forces.

Both loops C1 and C2 provide a compensated controlled variable x_{c} which is determined based on the elastic models. The effects of the increments determined by the machine learning model can be determined based on the elastic model of the blank holder device 2 and outputted as x_{c}. For example, a force and a position of each holding location of a multi-point die cushion can be outputted as the compensated controlled variable x_{c} for the upcoming current cycle. In addition, x_{c} may comprise forces and/or positions resulting from deformations and displacements calculated by the elastic press model (comprising at least the elastic model of at least part of the pressing force application device 2) during the current cycle.

Control error e is determined by (if necessary, negative) addition of w and x_{c}. Two controllers are provided as part of the inner loop C2, one outputting the manipulated variable y for the ram 2 which is denominated as ram control in Fig. 2, the other outputting the manipulated variable y for the die cushion device 7 which is denominated as die cushion control in Fig. 2.

In the control path, that is the process in the present case, a disturbance z such as lubrication, humidity etc. can affect the process comprising the equipment such as the press apparatus 1, the work piece 4, and interfaces therebetween and the outside.

After the process has finished the part shape may change due to elastic unloading or spring back and fracture defects may occur in a post process, for example, if the forces and/or positions have not been appropriately chosen. The detected part quality can then be provided as the aforementioned variable q.

The following table I lists exemplary sets of items of exemplary feedback controls carried out by method of Fig. 2. With reference to Fig. 2, the variables/signals listed in said table are the reference variable w, which is a value stored in a memory, for example. Further, the signal x/q, which is fed back is listed, as well as the compensated controlled variable signal x_{c}. Please note that in C2 x and x_{c} refer to a measurement/calculation of the current cycle. Further, it is provided how x_{c} is determined by the exemplary embodiment. The error e is reduced by means of manipulating variable y.

Regarding case number 1, an angle or position is provided as the reference value w. For case number 1, the press apparatus 1 may be provided with a plurality of position and/or angle and/or force sensors which detect positions/angles/forces at reference locations of the system, thereby providing the signal x. In addition, an elastic positional displacement is determined using an analytic elastic model and fed back as x. As can be seen from Fig. 1, the ram 2 has a beam shape which can be modelled, for example, by a Timoshenko beam. Also, the linear guides 5 can be modulated as Timoshenko beams, for example. The model has advantageously load introduction and support locations matching the aforementioned reference locations in the press apparatus 1. The compensated controlled variable x_{c} and hence also the error e can be determined based on the calculations of the elastic model of the ram 2. Once, the deviation e is determined, the position or force of, for example, hydraulic cylinders being a drive source of the ram 2 can be manipulated to alleviate said error. For example, a position sensor may detect the real position of a drive source of the ram 2. However, the compensated controlled signal x_{c} does not only comprise that signal but also a positional displacement calculated by the elastic model. In other words, x_{c} may be a superposition of a sensor signal and calculated model output.

It should be noted that if an angle is provided as the reference value, a posture and an orientation of the pressing force application device can be controlled/regulated. For example, three positional sensors measuring positions related to the aforementioned working plane can provide the controlled signal x. A rigid body model of at least part of the pressing force application device can then calculate for angular displacements. The ram control can then control the inclination of the pressing force application device by manipulating (adjusting) the position of each of a plurality of drive sources of the pressing force application device.

While in case number 1, an angle or position has been provided, case number 2 considers the case where a desired force is inputted as reference signal w, for example, as part of a load/position vector. The rest of the control is similar to the first case. It should be noted that due to the at least one linear guide 5, reaction forces will occur at the linear guides 5. Therefore, it is advantageous to provide at least one force sensor coupled to one of the linear guides and measuring the force occurring at said linear guide 5.

Case number 3 considers the outer loop C1. A maximum distance between the holder and the die 3b can be provided as reference value, which corresponds to a position of the blank holder and hence the die cushion device before a pressing force is applied (initial position). However, based, for example, on a variable thickness of the work piece, which is one example of a geometry of the work piece, the distance might be required to be corrected which is determined by the machine learning model. The thickness can be measured, for example, by a triangulation sensor for the current cycle. Based on measurements of fabricated parts from previous cycles and their corresponding work piece thicknesses, the machine learning model of the die cushion device can provide for the determination of an appropriate position of the blank holder device based on machine learning. Therefore, an updated distance (initial position) between the holder 7 and the die is fed back as x_{c} and the deviation e is determined based on an output of the machine learning model. In accordance therewith, the position of a drive source such as the hydraulic cylinder of each pin 7a can be adjusted. It should be noted that the updated clearance may be input into the elastic model of the blank holder device wherein the mechanical behaviour in view of the updated clearance is determined and additionally fed back, which improves the regulation of the upcoming cycle. Please note that the thickness of the work piece affects not only the initial distance but also the forces to be applied by the die cushion device.

Other example is provided as case 4. As a controlled variable/signal the velocity with which the work piece 4 is infed into the die 3 can be fed back. This can be done by tool integrated velocity sensors. Preferably, the clamping forces at the holder locations which are friction forces as well as loads and/or positions of the die cushion device 7 are also measured and provided to the die cushion device model. Further, a tool wear state can also be obtained by a sensor and inputted to the machine learning model. Based on machine learning, these signals together with the measured part quality q can provide a determination of the appropriate force to be applied by the blank holder device 7. The effect of the appropriate force can be obtained by an elastic model of the die cushion device, preferably comprising at least part of the blank holder. In particular, the machine learning model may output an appropriate force at each holding location of a multi-point die cushion. However, the elastic model can then determine the effect of the appropriate forces at any of the other holding locations which is then comprised by the accordingly compensated controlled variable.

Said force can then be regulated on real time basis during the current cycle based on the currently measured velocity and force signals as it is expressed by the multipoint cushion in Fig. 2.

In view of the above, other example of the quantity obtained by the machine learning model may be the force to be applied by the blank holder device 7, preferably, at least the impact force at the time of contact between tool 3 and die cushion device 7, in particular the blank holder thereof. The updated force is then fed back in order to be processed together with the reference value w to determine the deviation e.

In the real time loop, the regulation is also carried out for the die cushion device comprising the multi-point die cushion as it is shown in Fig. 2. In the real time regulation, force and/or load sensors are used to obtain actual values for the position and/or force of the die cushion device to constantly determine an error e based on the compensated controlled variable x_{c} during the current cycle which in turn depends on the compensated controlled variable determined by the outer loop control. The combination of providing the cycle time and real time regulation using a real time capable model such as the elastic press model and a cycle time capable model such as the machine learning model and/or the elastic die cushion device model is also referred to as digital twin.

It should be noted that the force of the die cushion may depend on the stroke and/or time and/or the course of the force may be determined using a machine learning model.

It should be further noted that also an elastic model of the work piece may be provided in the feed back portion of the outer loop C1. Such elastic model can be inputted with forces measured during the last cycle, for example. Thereby, the part quality can be expressed as function depending on the load states over the stroke, which can then be inputted to the machine learning model, for example.

**Tab. I: items of closed loop control**

| Case no. | Determination of x_{c} | Reference value w | Controlled variable x/q | Compensated controlled variable x_{c} | Manipulated variable y | Loop |
|---|---|---|---|---|---|---|
| 1 | Elastic model comprising ram 2 | Angle/position | Signal from position/force sensors | Displacements resulting from elastic behaviour | Position/force of drive source of ram 2 | C2 |
| 2 | Elastic model comprising ram 2 | force | Signal from position/force sensors | Loads resulting from elastic behaviour | Position/force of drive source of ram 2 | C2 |
| 3 | Die cushion device machine learning model | Initial position of blank holder | Thickness of work piece 4 | Distance resulting from machine learning model | Position of drive source of die cushion device | C1 |
| 4 | Elastic model and machine learning model of die cushion device | Force of blank holder device | signal force sensors, part quality, sheet infeed velocity | Force resulting from machine learning and elastic model | Position/force of drive source of die cushion device | C1 |

The above-mentioned exemplary cases are not intended to limit the scope of protection. Rather, other signals can be used and fed into the machine learning model.

The above embodiments provide the following effects.

A method of operating a press apparatus and a forming process is provided, wherein the press apparatus comprises a pressing force application device configured to apply a pressing force to a work piece 4 to be fabricated by the press apparatus during a pressing process, wherein the method comprises.
a) regulating a posture, orientation and/or position and/or force of at least the pressing force application device based on at least one signal obtained during the pressing process using a virtual model of at least part of the press apparatus, preferably a posture, orientation and/or position and/or force related signal obtained during the pressing process such as in cases 1 and 2. The virtual model of at least part of the press apparatus is preferably a virtual model excluding a model of the die cushion device.

In cases 3 and 4, the method comprises regulating a posture, orientation and/or a position and/or force of the die cushion device using a virtual model of at least part of the die cushion device.

In cases 1 and 2, a signal obtained during the current forming process is used. Hence, the current forming process can be regulated in a real time manner. In particular, counteraction is not calculated in advance but rather counteraction can be carried out based on the actual behaviour of the pressing process. As the respective signals can be inputted to the virtual model, compensation values can be derived from the virtual model. If posture, orientation and/or position and/or force related signals obtained during the pressing process are used, a direct feedback with respect to the controlled behaviour can be given. As a result, the method can increase accuracy in manufacturing the work piece.

In cases 3 and 4, by providing a virtual model related to the behaviour of the die cushion device 7, it is possible to counteract deviations via the die cushion device 7.

The virtual model comprises an elastic model of at least part of the press apparatus, preferably at least part of the pressing force application device such as the ram 2, and the die device 7, preferably at least part of the blank holder, calculating at least one of deformations and displacements and loads of at least part of the press apparatus and a deviation e from a reference value w is determined based on the calculated deformations and/or displacements and/or loads. According thereto, the mechanical behaviour of at least part of the press apparatus can be specified and errors owed to misalignment and deformation can be derived from the model and accordingly counteracted. As presented above, the model comprises an elastic beam model, preferably, a model based on the Timoshenko beam. Thereby, an exact model for the structure can be provided which improves calculability in real time.

In cases 3 and 4, the elastic model may receive an output of a machine learning model.

Thereby, the effect of an output of the machine learning model in terms of the elastic and mechanical behaviour can be checked. For example, if the machine learning model determines a force and/or position increment, the effects of said increment can be determined based on the elastic model and appropriately compensated. The machine learning model may also output parameters such as stiffness and damping of the die cushion device and/or forming process which in turn can update the elastic model itself regarding the stiffness and damping properties of the elastic model. That is, the elastic model preferably comprises a parameterization in view of at least one of the items listed above. However, it should be noted that also only one of the elastic and the machine learning model can be provided.

Also, at least the elastic press model comprises an analytic model, wherein preferably, the model is provided with such a number of respective signals that a statically and/or dynamically determined equation system is provided.

Also this enables improvement of calculability and calculation time, wherefore real time implication can more reliably implemented. Hence, errors can be counteracted in real time. In addition, a well defined and unambiguous solution for the model can be obtained.

In cases 1 and 2, a position and/or force of a drive source of the pressing force application device is manipulated (adjusted) while in cases 3 and 4 a position and/or force of a drive source of the die cushion device is manipulated (adjusted).

Thereby, the derived errors can be counteracted by the drive source itself which changes the behaviour of the press force application device.

The press apparatus 1 comprises at least one positional sensor, preferably a plurality thereof, even more preferably coupled to a drive source of the pressing force application device 2 and/or the die cushion device 7 and/or coupled to the linear guides 5 to provide at least one of the respective signals. The number of positional sensors may be 3 or 4, for example, depending on the model complexity.

In this way, the press apparatus can provide the signals used for the regulation specified in the above aspects.

The press apparatus 1 comprises at least one load sensor, preferably a plurality thereof, even more preferably coupled to a drive source of the pressing force application device 2 and/or the die cushion device 7 detecting at least one load occurring during the pressing process to provide at least one of the respective signals. The number of positional sensors may be 3 or 4, for example, depending on the model complexity.

Thereby, not only forces applied by the drive sources but also reaction loads occurring during the pressing process can be detected and inputted to and/or calculated by the virtual model. Hence, the deviation with respect to the desired state can be determined with high accuracy which also allows fabrication with high accuracy.

In the above, the term "coupled" means that the respective sensor can provide the respective signal related to the device to which it is coupled.

In cases 3 and 4 the virtual model can comprise a machine learning model.

Hence, the model can be updated from, for example, cycle to cycle. In particular, control of the die cushion device 7 needs not to be done based on parameter optimization and/or experience of an operator. Rather, information regarding the work piece 4, the die cushion device 7, and further process parameter can be used to provide an accurate simulation of the effects of the die cushion on the fabrication process.

In case 3, the machine learning model determines at least one of a position of the die cushion device 7 before a pressing force is applied. That is, the clearance between the blank holder and the tool 3 is set.

Hence, an appropriate control quantity regarding a pressing cycle can be set based on the information stored in the machine learning model which can be continuously updated from cycle to cycle.

In case 4, the force applied by the die cushion device 7 can be determined by a machine learning model. Said force determines the clamping force with which the work piece is clamped between the upper die 3a, for example, and the die cushion device 7. This clamping force is decisive for the pressing process, as it affects factors such as infeed velocity etc.

In case 3, the above determination uses at least the thickness of the work piece to be fabricated, quality properties of the fabricated part and process related signals obtained during the pressing process.

Hence, values and properties known or measured in advanced, during the process and after the process can be used to provide a more accurate machine learning model. Therefore, appropriate process parameters such as stiffness and/or damping of the die cushion device 7 can be determined. For example, the fabricated part can be analysed and quality related values can be fed into the machine learning model together with in-process signals obtained during the pressing process in which the part was fabricated from the work piece.

In the above embodiments, in b1) at least before a pressing force is applied, a position of the die cushion device may be controlled.

As presented above, the position of the die cushion device before a pressing force is applied can determine the clearance between the die and the blank holder, or respectively, between the position where the upper die 3a comes into contact with the blank holder and the lower die 3b. By controlling the same, an appropriate clearance can be ensured. This is particularly advantageous if the step of a) as presented above is applied, as an alignment of the die cushion device with the press force application device can be ensured until the press force application device comes into contact with the die cushion device.

Preferably, in b) in b2) at the earliest at the moment a pressing force is applied, a force of the die cushion device may be regulated.

The force applied by the die cushion device determines the clamping force with which the work piece is clamped between the upper die, for example, and the blank holder. This clamping force is decisive for the pressing process, as it affects factors such as infeed velocity etc. Regulating the same can foster accuracy of the pressing process. Preferably switching between b1) and b2) is performed while the pressing force application device is moving.

The die cushion device 7 can comprise a multi-point die cushion configuring the die cushion device to hold the work piece at a plurality of locations, and wherein the position and/or the force are regulated at least at some of the plurality of locations.

Hence, each of the locations where the blank holder holds the work piece can be regulated individually. Therefore, flexibility in the fabrication process can be increased. In particular, complex part geometries can be handled as the forces and/or positions of the separate holding locations can be freely adjusted such that the work piece can appropriately deform between these locations. The above-mentioned aspects are particularly advantageous in such configuration as, for example, alignment can be obtained by appropriately regulating at at least one of the multiple points independently from the other points.

Preferably, at least two, more preferably at least three holding locations with respective drive sources are provided for the multi-point die cushion. This enables control of a posture and orientation. Similar, also the pressing force application device may comprise at least two, preferably three drive sources.

For both, the die cushion device and the pressing force application device, the drive sources are preferably linear actuators, more preferably hydraulic cylinders.

In the description and claims, the term "at least" also comprises "entire(ly)" unless otherwise specified.

In the above description, a control apparatus might be provided which comprises a processor to run a program carrying out the method of the invention. The control apparatus may also include a storage such as a RAM to store model data, for example. The control apparatus might have a site-based portion which is stationary with the press apparatus and a cloud-based portion which is provided on a server and stores the model, for example.

The above mentioned press apparatus may be a hydraulic or mechanical servo press, for example. However, other presses are also comprised by the press apparatus of the present invention.

The term "load" used herein comprises momentum and forces. When the term "force" is used, where appropriate the skilled person understands that also a "momentum" can be covered by that term while it always at least refers to a force. For example, if a rotatory drive source is used such as an electric motor, also a momentum may be controlled.

The term "pressing force application device" used herein may comprise a ram and/or a movable table, as well as the drive sources. It preferably comprises the moving parts of the press apparatus which apply the pressing force.

The term "die cushion device" used herein may comprise the blank holder, as well as the drive sources and is used for clamping the work piece.

The above quantities used as input or output could be used in any combination. That is, only one, several, or all of the quantities can be used for the respective models.

## Claims

1. Method of operating a press apparatus (1) and/or a forming process, the press apparatus comprising a controllable pressing force application device (2) configured to apply a pressing force to a work piece (4) to be fabricated by the press apparatus (1) during a forming process, wherein the method comprises:
a) regulating a posture, orientation and/or position and/or force of at least the pressing force application device (2) based on at least one signal obtained during the forming process using a virtual model of at least part (2, 7) of the press apparatus (1), preferably a posture, orientation and/or position and/or load related signal, and/or
b) the press apparatus (1) further comprising a controllable die cushion device (7), and the method comprising:
regulating a posture, orientation and/or position and/or force of the die cushion device (7) using a virtual model of at least part of the die cushion device (7),
preferably in a) and/or b) a deviation from a reference value (w) is determined based on an output of the virtual model.

2. Method according to claim 1,
wherein in a) the virtual model comprises a rigid body and/or an elastic model of at least part (2, 7) of the press apparatus (1), preferably calculating at least one of deformations, displacements, and loads of at least part of the press apparatus (1) and more preferably a deviation from a reference value (w) is determined based on the calculated deformations and/or displacements and/or loads.

3. Method according to claim 1 or 2,
wherein in a) the virtual model, preferably the elastic model, comprises an analytic model, wherein even more preferably the model is provided with such a number of respective signals that a statically and/or dynamically determined equation system is provided.

4. Method according to any of the preceding claims,
wherein in a) a position and/or force of a drive source of the press force application device (2) is adjusted and/or in b) a position and/or force of a drive source of the die cushion device (7) is adjusted.

5. Method according to any of the preceding claims,
wherein the press apparatus (1) comprises at least one positional sensor, preferably a plurality thereof, even more preferably encoders most preferably coupled to a drive source of the pressing force application device and/or the die cushion device (7) and measuring the position of the drive source of the pressing force application device (2) and/or the die cushion device (7), to provide at least one of the respective signals.

6. Method according to any of the preceding claims,
wherein the press apparatus (1) comprises at least one load sensor, preferably a plurality thereof, even more preferably coupled to a drive source of the pressing force application device and/or the die cushion device (7), detecting at least one load occurring during the forming process to provide at least one of the respective signals.

7. Method according to any of the preceding claims,
wherein in b) the virtual model comprises a machine learning model.

8. Method according to claim 7,
wherein the machine learning model determines at least one of a position of the die cushion device (7), preferably before a pressing force is applied, and a force of the die cushion device (7).

9. Method according to claim 8,
wherein the determination uses at least one of material properties and geometry of the work piece (4) to be fabricated, quality properties of the fabricated part and process related signals obtained during the pressing process, preferably at least one of a signal related to an infeed velocity of the work piece (4), a thickness of the work piece (4), and loads and/or positions obtained during the forming process.

10. Method according to any of the preceding claims,
wherein in b) the virtual model comprises an elastic model of at least part of the die cushion device (7), preferably calculating at least one of deformations, displacements, and loads, and more preferably the orientation, force and/or position and/or posture of the die cushion device (7) is adjusted based on the calculated deformations and/or displacements and/or loads.

11. Method according to claim 10,
wherein the elastic model receives an output of a machine learning model preferably the machine learning model according to any of claims 7 to 10.

12. Method according any of the preceding claims,
wherein in b) in b1) at least before a pressing force is applied, a position of the die cushion device (7) is controlled.

13. Method according to any of the preceding claims,
wherein in b) in b2) at the earliest at the moment a pressing force is applied, a force of the die cushion device (7) is regulated.

14. Method according to any of the preceding claims,
wherein the die cushion device (7) comprises a multi-point die cushion configuring the die cushion device (7) to hold the work piece at a plurality of locations, and
wherein the posture, orientation and/or position and/or the force are regulated at least at some of the plurality of locations.

15. A press apparatus (1) as specified in any of the preceding claims and comprising a control apparatus configured to carry out the method according to any of the preceding claims.
